# EUROPÄISCHE PATENTANMELDUNG

(11) **EP 1 072 876 A1**
(43) Veröffentlichungstag der Anmeldung: **31.01.2001**
(21) Anmeldenummer: 00115627.2
(22) Anmeldetag: 20.07.2000
(51) Int. Cl.: G01K 7/02

(54) **Schaltung zum Auswerten von Thermoelement-Messsignalen**

(30) Priorität: 22.07.1999 DE 19934489
(71) Anmelder: Webasto Thermosysteme International GmbH, 82131 Stockdorf (DE)
(72) Erfinder: Nigst, Helmut, c/o Webasto Thermosystems Inc., Lapeer, MI 48446 (US)
(74) Vertreter: Wiese, Gerhard

(57) **Zusammenfassung**

Die Erfindung betrifft eine Schaltung zum Auswerten eines Messsignals eines Thermoelements (S1), insbesondere eines als Flammwächter eines Fahrzeugheizgeräts genutzten Thermoelements, mit einem Verstärker (U1) zum Verstärken des Messsignals und einem mit dem verstärkten Messsignal als Eingangssignal beaufschlagten Microcontroller (µC). Erfindungsgemäß ist vorgesehen, dass ein Schalter (T2) zum Kurzschließen des Eingangs (15) des Verstärkers (U1) während einer Messtaktpause vorgesehen ist, und dass der Mikrocontroller (µC) einen Speicher aufweist, in welchem das Eingangssignal während der Messtaktpause abgelegt wird, und dass der Mikrokontroller (µC) einen Korrekturalgorithmus aufweist, um das Messsignal anhand des im Speicher abgelegten Signals vor der Auswertung zu korrigieren. Durch diese Maßnahme wird erreicht, dass ein kostengünstiger Operationsverstärker als Verstärker (U1) zur Erzielung einer zuverlässigen Aussage über die am Messort vorherrschende Temperatur verwendet werden kann.

## Beschreibung

Die vorliegende Erfindung betrifft eine Schaltung zum Auswerten eines Messsignals eines Thermoelements, insbesondere eines als Flammwächter eines Fahrzeugheizgeräts genutzten Thermoelements, mit einem Verstärker zum Verstärken des Messsignals und einem mit dem verstärkten Messsignal als Eingangssignal beaufschlagten Microcontroller.

Bei der Auswertung von Thermoelement-Messsignalen treten typischerweise eine Reihe von Problemen auf. Um diese Messsignale, deren Spannung im Millivolt Bereich liegt, durch einen Microcontroller auswertbar zu machen, müssen sie in die Größenordnung von Volt verstärkt werden. Aufgrund der erforderlichen Auswertungsgenauigkeit werden zu diesem Zweck üblicherweise teure Verstärker, nämlich Messverstärker insbesondere in Gestalt von integrierten Bausteinen verwendet.

Problematisch bei der Auswertung von Thermoelement-Messsignalen ist ferner, dass ein Defekt des Thermoelements, beispielsweise eine Unterbrechung desselben ohne größeren Schaltungsaufwand nicht erkennbar ist. Ein weiteres Problem stellt die Tatsache dar, dass das Thermoelement-Messsignal je nach Temparaturdifferenz zwischen Thermoelement und Steuergerät bzw. Verstärker positives oder negatives Vorzeichen hat, während der Microcontroller typischerweise nur positive Spannungen verarbeiten kann. Schließlich lassen sich mit einem Thermoelement prinzipbedingt ausschließlich Temparaturdifferenzen zwischen zwei Punkten messen. Zur Ermittlung der Absoluttemperatur mittels eines Thermoelements müssen deshalb zusätzliche, üblicherweise aufwendige Maßnahmen ergriffen werden.

Angesichts dieses Standes der Technik liegt der Erfindung die Aufgabe zugrunde, eine Schaltung zum Auswerten eines Messsignals eines Thermoelements der im Oberbegriff des Anspruchs 1 genannten Art zu schaffen, welche die erforderliche Genauigkeit unter Verwendung kostengünstiger Bauelemente gewährleistet.

Gelöst wird diese Aufgabe durch die kennzeichnenden Merkmale des Anspruchs 1. Vorteilhafte Weiterbildungen der Erfindung sind in den Unteransprüchen angegeben.

Mit anderen Worten sieht die Erfindung die Erfassung von konstruktionsbedingten Fehlern des Verstärkers vor, welche erfassten Fehler daraufhin im Microcontroller bei der Auswertung des Thermoelement-Messsignals berücksichtigt werden, so dass ein bezüglich Verstärkerfehlern korrigiertes Messsignal zur Auswertung gelangt. Die erfindungsgemäßen Maßnahmen erlauben damit die Nutzung kostengünstiger fehlerbehafteter Verstärker zur Verstärkung des Thermoelement-Messsignals anstelle der bislang verwendeten teuren Messverstärker. Typischerweise kostet ein preiswerter, weniger präziser Standard-Operationsverstärker im Vergleich zu einem hochpräzisen Messverstärker wesentlich weniger, z.B. etwa nur ein Zehntel. Die erfindungsgemäßen Maßnahmen zur Fehlerkorrektur, d.h. die dafür genutzten Bauelemente und Programmierungsmaßnahmen am Microcontroller erhöhen die Kosten nur geringfügig, so dass die erfindungsgemäße Schaltung jedenfalls deutlich kostengünstiger als die bisherige ist. Es hat sich ferner herausgestellt, dass die durch die erfindungsgemäße Fehlerkorrektur bei Einsatz eines kostengünstigen Verstärkers erzielbare Genauigkeit bei Verzicht auf die von einem Messverstärker bereitgestellte Genauigkeit eine zuverlässige Aussage über die am Messort herrschende Temperatur gewährleistet.

Der Verstärker der erfindungsgemäßen Auswertungsschaltung ist vorteilhafterweise als Differenzverstärker geschaltet, dessen nichtinvertierender Eingang und dessen invertierender Eingang mit zwei Anschlüssen des Thermoelements verbunden und vom Schalter überbrückt sind, durch dessen Schließen in der Messtaktpause die dem Fehlen eines Verstärkers innewohnende Spannung an den Microcontroller zur nachfolgenden Fehlerkorrektur des Messsignals weitergegeben wird.

Bei dem Schalter handelt es sich bevorzugt um einen Halbleiterschalter, vorteilhafterweise in Gestalt eines Feldeffekttransistors (FET). Dieser Schalter ist im Fall einer Schaltung des Verstärkers als Differenzverstärker zwischen dessen nicht-invertierenden Eingang und dessen invertierenden Eingang geschaltet.

Die Ansteuerung des Schalters erfolgt vorteilhafterweise über einen den Messtakt führenden Steuerausgang des Microcontrollers.

Um die einleitend angesprochene Problematik der Erkennung eines Thermoelement-Defekts kostengünstig und mit geringem Aufwand zu überwinden, ist gemäß einer vorteilhaften Weiterbildung der Erfindung zusätzlich ein Schaltkreis zur Beaufschlagung des Thermoelements mit einem Prüfstrom während einer Messtaktpause vorgesehen, und der Microcontroller umfasst eine Einrichtung zur Bewertung seines in der Messtaktpause anliegenden Eingangssignals. Bevorzugt ist dieser Schaltkreis derart eingangsseitig an den Verstärker gekoppelt, dass durch den Prüfstrom bei ordnungsgemäß arbeitendem Thermoelement am Ausgang des Verstärkers keine nennenswerte Spannung erzeugt wird, während bei defektem Thermoelement eine aussagekräftige sich von dieser unterscheidende Spannung am Ausgang des Verstärkers auftritt.

Der Prüfstrom zur Erkennung des Thermoelement-Zustands wird dem Thermoelement bevorzugt mittels eines Schalters zugeführt, der wiederum vorteilhafterweise als Halbleiterschalter, etwa als FET ausgelegt ist und über einen den Messtakt führenden Steuerausgang des Microcontroller angesteuert wird.

Gemäß einer vorteilhaften Weiterbildung der Erfindung wird das eingangs genannte Problem, demnach ein Microcontroller typischerweise nur positive Spannungen verarbeiten kann, erfindungsgemäß dadurch überwunden, dass zu dem bevorzugt verstärkten Messsignal eine positive Gleichspannung addiert wird, die höher ist als der Betrag der negativen Messsignalspannung am Additionspunkt. Dadurch ist gewährleistet, dass die am Microcontroller-Eingang anliegende Spannung sich stets im positiven Bereich befindet.

Schließlich ist erfindungsgemäß eine Maßnahme getroffen, um die eingangs genannte Problematik der Erfassung einer Absoluttemperatur mittels des Thermoelements zu überwinden. Demnach ist eine Einrichtung zum Messen der Absoluttemperatur einer den Verstärker tragenden Platine und der Temperaturdifferenz zwischen der Messstelle des Thermoelements und der Platine vorgesehen, aus denen der Microcontroller die Absoluttemperatur an der Messstelle berechnet.

Nachfolgend wird die Erfindung anhand der Zeichnung beispielhaft näher erläutert. Es zeigt:
- Fig. 1:: schematisch eine Ausführungsform der erfindungsgemäßen Schaltung,
- Fig. 2:: eine Teildraufsicht auf ein Heizgerät, für das sich die Schaltung gemäß Fig. 1 eignet, und
- Fig. 3:: eine Teilschnittdarstellung des Heizgerätes

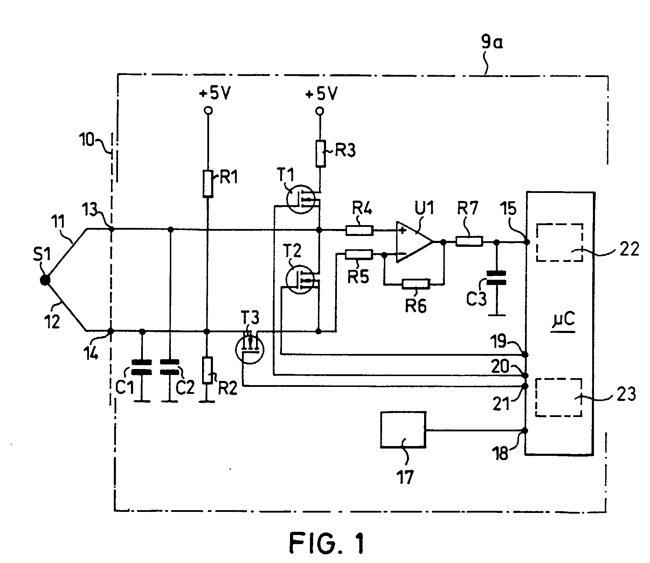

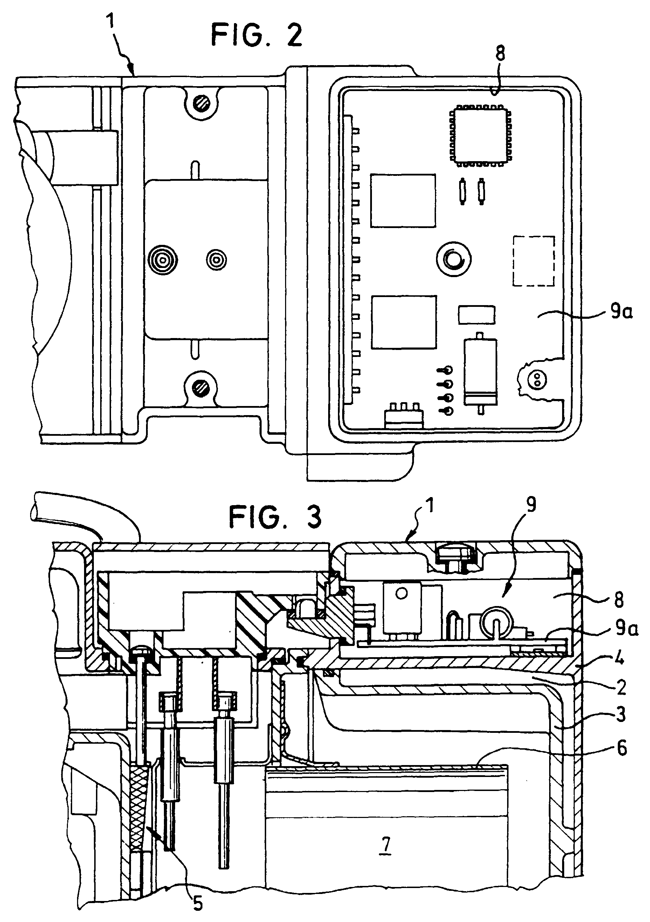

In Fig. 1 ist links von einer strichlierten Linie 10 schematisch ein Thermoelement S1 gezeigt und rechts von der Linie 10 ist schematisch die Platine 9a mit einer Auswerteschaltung für das Thermoelement S1 gezeigt, das beispielsweise Teil eines Steuergeräts 9, insbesondere für ein Fahrzeugheizgerät 1 gemäß den Figuren 2 und 3, bildet. Die eigentliche Auswertung des Thermoelement-Messsignals erfolgt in einem Messakt durch einen Microcontroller, der in Fig. 1 mit µC bezeichnet ist. Dem Microcontroller µC ist ein Operationsverstärker U1 vorgeschaltet, um die im Millivolt Bereich liegenden Messsignale auf einen Pegel zu verstärken, der in einem auf den Microcontroller-Eingang folgenden, nicht gezeigten D/A-Wandler verarbeitet werden kann.

In Fig. 2 und 3 ist ein Heizgerät insgesamt mit 1 bezeichnet. Als Beispiel ist ein Fahrzeugzusatzheizgerät gezeigt, das mit einem flüssigen Wärmeträger, beispielsweise Wasser, arbeitet. Ein derartiges Heizgerät ist beispielsweise in den Kühlmittelkreislauf eines Kraftfahrzeugs eingebunden. Der flüssige Wärmeträger durchströmt einen Zwischenraum 2, der zwischen einem Wärmeübertrager 3 und einem mantelförmigen Außengehäuse 4 gebildet ist. Das Heizgerät 1 weist ferner einen schematisch dargestellten Brenner 5 auf, der in eine von einem Brennrohr 6 gebildete Brennkammer 7 ragt. Die als Stutzen im Außengehäuse 4 ausgebildeten Ein- und Auslässe für den flüssigen Wärmeträger sind bei dem Heizgerät 1 in der Zeichnung nicht gezeigt. Wie insbesondere aus Fig. 2 hervorgeht, ist an der Außenseite des mantelförmigen Außengehäuses 4 ein Aufnahmeraum 8 angeformt, der zweckmäßigerweise am mantelförmigen Außengehäuse 4 angegossen ist. In dem Aufnahmeraum 8 ist ein allgemein mit 9 bezeichnetes Steuergerät untergebracht. Das Steuergerät 9 umfasst eine oder mehrere Platinen, im gezeigten Beispiel eine Platine 9a, die als gedruckte Schaltungsplatte ausgelegt sein und/oder mit entsprechenden elektrischen oder elektronischen Bauteilen bestückt sein kann.

Ilm einzelnen ist das Thermoelement S1 über zwei Zuleitungen 11, 12 mit einer zwei Anschlüsse 13, 14 umfassenden Messstelle auf der Platine 9a verbunden, auf welcher die Elektronik des Steuergeräts 9 implementiert ist. Der Messstellenanschluss 13 steht über einen Widerstand R4 in Verbindung mit einem nicht-invertierenden Eingang (+) des Operationsverstärkers U1. Der Messstellenanschluss 14 steht über einen Transistor T3 und einen Widerstand R5 in Verbindung mit einem invertierenden Eingang (-) des Operationsverstärkers U1. Zur Einstellung des Verstärkungsfaktors des Operationsverstärkers U1 ist dessen invertierender Eingang über einen Widerstand R6 mit seinem Ausgang verbunden. Der Ausgang des Operationsverstärkers U1 ist außerdem über einen Widerstand R7 mit einem Eingang 15 des Microcontrollers µC verbunden.

Kondensatoren C1, C2 und C3 sind als Filterelemente bzw. zur EMV-Unterdrückung vorgesehen. Demnach sind jeweils auf Masse gelegte Kondensatoren C1 und C2 mit den Messstellenanschlüssen 14 und 13 verbunden und ein mit Masse verbundener Kondensator C3 ist mit dem Eingang 15 des Microcontrollers verbunden.

Eine Gleichspannung in Höhe von +5V ist über einen Spannungsteiler aus Widerständen R1 und R2 mit der Verbindungsleitung zwischen dem Messstellenanschluss 14 und dem Transistor T3 angelegt.

Eine Temperaturmesseinrichtung 17 ist mit einem Temperaturerfassungseingang 18 des Microcontrollers µC verbunden. Die Temperaturmesseinrichtung 17 ist beispielsweise in Gestalt eines handelsüblichen preiswerten IC implementiert, welcher gegebenenfalls die gemessene Temperatur bereits in digitaler Form in den Microcontroller µC oder in analoger in einen integrierten A/D-Wandler desselben eingibt. Die Temperaturmesseinrichtung 17 misst die Absoluttemperatur auf der Platine des Steuergeräts und somit auch an den auf der Platine liegenden Messstellenanschlüssen 13, 14. In dem Microcontroller µC erfolgt aus der Temperaturdifferenz zwischen der Temperatur an der Messstelle und der Absoluttemperatur auf der Platine des Steuergeräts eine Berechnung der Absoluttemperatur an den Messstellen. Für den Fall, dass das Thermoelement als Flammwächter in einem Fahrzeugheizgerät genutzt wird, ist eine Information über die Absoluttemperatur bei der Bewertung des Zustands Flamme EIN oder Flamme AUS nützlich.

Um einen kostengünstigen, jedoch mäßig genauen Standard-Operationsverstärker als Operationsverstärker U1 einsetzen zu können, welcher Standard-Operationsverstärker prinzipbedingt fehlerbehaftet ist, ist ein Halbleiterschalter in Gestalt eines Transistors, bevorzugt eines FET, nämlich der Transistor T2 vorgesehen, der über die Widerstände R4 und R5 zwischen den nicht-invertierenden und invertierenden Eingang des Operationsverstärkers U1 geschaltet und durch einen ersten Steuerausgang 19 des Microcontrollers µC gesteuert ist. Die Ansteuerung des Transistors T2 erfolgt derart, dass der Operationsverstärker U1 eingangsseitig während einer Messtaktpause kurzgeschlossen wird. Der Microcontroller µC umfasst einen bei 22 angedeuteten Speicher, in welchem das an seinem Eingang 15 anliegende Ausgangssignal des Operationsverstärkers U1 während der Messtaktpause abgelegt wird. In einem weiteren Speicher 23 des Microcontrollers µC ist ein Korrektur-Algorithmus abgespeichert, um das während eines Messtakts verstärkt in den Eingang 15 eingespeiste Messsignal anhand des abgelegten Signals vor der eigentlichen Auswertung zu korrigieren. Dadurch wird erreicht, dass der Ungenauigkeitsfehler des Operationsverstärkers U1 bei der Auswertung berücksichtigt wird, so dass es sich erübrigt, diesen in Gestalt eines teueren Messverstärkers zu implementieren.

Da der dem Operationsverstärker U1 innewohnende Fehler sich im Lauf der Betriebszeit, insbesondere im Zusammenhang mit einem wärmeerzeugenden Heizgerät und in dessen Nähe angeordnetem Steuergerät verändern kann, wird die vorstehend erläuterte Fehlermessung bevorzugt zyklisch durchgeführt.

Um die Funktionsfähigkeit des Thermoelements S1 bzw. einen Defekt desselbenzu erkennen, ist außerdem ein Schaltkreis zur Beaufschlagung des Thermoelements S1 mit einem Prüfstrom vorgesehen. Dieser Schaltkreis umfasst einen Transistor T1, der über einen zweiten Steuerausgang 20 des Microcontrollers µC angesteuert wird, und der andererseits über einen Widerstand R3 mit positiver Spannung, nämlich mit einer Spannung in der Höhe von +5V beaufschlagt ist. Außerdem ist der Transistor T1 mit der Verbindungsleitung zwischen dem Messstellenanschluss 13 und dem Widerstand R4 mit dem nicht-invertierenden Eingang des Microcontrollers µC verbunden.

Wenn der Transistor T1 in einer über den zweiten Steuerausgang 20 mitgeteilten Messtaktpause durchgesteuert wird, wird die Gleichspannung in Höhe von +5V über den Transistor T1 an den Messstellenanschluss 13 und damit an das Thermoelement S1 angelegt, über welches der Prüfstrom bei intaktem Thermoelement S1 zum anderen Messstellenanschluss 14 fließt, von welchem der Prüfstrom über den Widerstand R2 nach Masse abfließt. In diesem Fall, d.h. bei intaktem Thermoelement S1, liegt am Ausgang des Operationsverstärkers U1 kein Signal bzw. ein sehr kleines Signal an.

Wenn hingegen das Thermoelement S1 defekt ist und damit den Prüfstrom nicht weiterleitet, liegt an dem nicht-invertierenden Eingang des Operationsverstärkers U1 im wesentlichen die +5V-Gleichspannung an, so dass am Ausgang des Operationsverstärkers U1 eine relativ hohe Spannung anliegt, die im Microcontroller µC erkannt und einem Defekt des Sensors S1 zugeordnet wird.

Der in der Verbindungsleitung zwischen der Messstelle 14 und dem Widerstand R5 bzw. dem invertierenden Eingang des Operationsverstärkers U1 liegende weitere Transistor T3, wird über einen dritten Steuerausgang 21 des Microcontrollers µC angesteuert. Üblicherweise ist der Transistor T3 durchgesteuert, um das Signal von der Messstelle 14 an den Operationsverstärker U1 weiterzuleiten. Je nach praktischem Einsatz des Thermoelements S1 kann es jedoch erwünscht sein, an einer bestimmten Stelle des Messzyklus das Thermoelement S1 von der nachgeschalteten Schaltung elektrisch zu trennen, d.h. ein Messsignal nicht an den Operationsverstärker U1 weiterzuleiten.

Durch den Spannungsteiler aus R1, R2 wird zu dem von dem Thermoelement S1 gelieferten Messsignal eine genau bekannte positive Spannung hinzuaddiert, um zu gewährleisten, dass am Eingang 15 des Microcontrollers µC stets eine positive Spannung anliegt. Dies ist deshalb von Bedeutung, weil Microcontrofler üblicherweise nur positive Spannungen verarbeiten, während das Thermoelement S1 positive und negative Spannungen abgibt. Die hinzu addierte positive Spannung ist deshalb betragsmäßig höher gewählt als der maximale Betrag der vom Thermoelement S1 gelieferten Messspannung.

### Bezugszeichenliste

- 1: Heizgerät
- 2: Zwischenraum
- 3: Wärmeübertrager
- 4: Außengehäuse
- 5: Brenner
- 6: Brenner
- 7: Brennkammer
- 8: Aufnahmeraum
- 9: Messgerät
- 9a: Platine
- 10: Linie
- 11: Zuleitung
- 12: Zuleitung
- 13: Messstellenanschluss
- 14: Messstellenanschluss
- 15: Eingang des Microcontrollers
- 17: Temperaturmesseinrichtung
- 18: Temperaturerfassungseingang
- 19: erster Steuerausgang
- 20: zweiter Steuerausgang
- 21: dritter Steuerausgang
- S1: Thermoelement
- U1: Operationsverstärker
- T1: Transistor zum Aufschalten eines Prüfstroms
- T2: Transistor zum Kurzschließen des Operationsverstärkereingangs
- T3: Transistor zum Abkoppeln des Thermoelements
- µC: Microcontroller
- R1..7: Widerstände
- C1..3: Kondensatoren
- 22: Speicher
- 23: Speicher

## Patentansprüche

1. Schaltung zum Auswerten eines Messsignals eines Thermoelements (S1), insbesondere eines als Flammwächter eines Fahrzeugheizgeräts genutzten Thermoelements, mit einem Verstärker (U1) zum Verstärken des Messsignals und einem mit dem verstärkten Messsignal als Eingangssignal beaufschlagten Microcontroller (µC), **dadurch gekennzeichnet,** dass ein Schalter (T2) zum Kurzschließen des Eingangs des Verstärkers (U1) während einer Messtaktpause vorgesehen ist, und dass der Mikrocontroller (µC) einen Speicher aufweist, in welchem das Eingangssignal während der Messtaktpause abgelegt wird, und dass der Mikrokontroller (µC) einen Korrekturalgorithmus aufweist, um das Messsignal anhand des im Speicher abgelegten Signals vor der Auswertung zu korrigieren.

2. Schaltung nach Anspruch 1, **dadurch gekennzeichnet**, dass der Verstärker (U1) ein preiswerter Standard-Operationsverstärker ist.

3. Schaltung nach Anspruch 1 oder 2, **dadurch gekennzeichnet**, dass das Thermoelement zwei Anschlüsse (13, 14) aufweist und dass der Verstärker (U1) als Differenzverstärker geschaltet ist, dessen nichtinvertierender Eingang und dessen invertierender Eingang mit den beiden Anschlüssen (13, 14) des Thermoelements (S1) verbunden und vom Schalter (T2) überbrückt sind.

4. Schaltung nach Anspruch 1, 2 oder 3, **dadurch gekennzeichnet**, dass der Schalter (T2) ein Halbleiterschalter ist.

5. Schaltung nach Anspruch 4, **dadurch gekennzeichnet**, dass der Halbleiterschalter ein Feldeffekttransistor (FET) ist.

6. Schaltung nach einem der Ansprüche 1 bis 5, **dadurch gekennzeichnet**, dass der Schalter (T2) über einen den Messtakt führenden Steuerausgang (19) des Microcontrollers (µC) angesteuert ist.

7. Schaltung nach einem der Ansprüche 1 bis 6, **dadurch gekennzeichnet**, dass ein Schaltkreis (T1, R3, R2) zur Beaufschlagung des Thermoelements (S1) mit einem Prüfstrom während einer Messtaktpause vorgesehen ist, und dass der Mikrocontroller (µC) eine Einrichtung zur Bewertung seines in dieser Messtaktpause anliegenden Eingangssignals aufweist.

8. Schaltung nach Anspruch 7, **dadurch gekennzeichnet**, dass der Prüfstrom über einen Schalter (T1) zugeführt wird.

9. Schaltung nach Anspruch 7, **dadurch gekennzeichnet**, dass der Schalter (T1) ein Halbleiterschalter ist.

10. Schaltung nach Anspruch 9, **dadurch gekennzeichnet**, dass der Halbleiterschalter ein Feldeffekttransistor (FET) ist.

11. Schaltung nach einem der Ansprüche 7 bis 10, **dadurch gekennzeichnet**, dass der Schalter (T1) über einen den Messtakt führenden Steuerausgang des Microcontrollers (µC) angesteuert ist.

12. Schaltung nach einem der Ansprüche 1 bis 11, **dadurch gekennzeichnet**, dass eine Einrichtung zum Addieren einer positiven Gleichspannung zum (verstärkten) Messsignal vorgesehen ist, die höher ist als der Wert der Messsignalspannung.

13. Schaltung nach einem der Ansprüche 1 bis 12, **dadurch gekennzeichnet**, dass eine Einrichtung (17) zum Messen der Absoluttemperatur einer den Verstärker (U1) tragenden Platine 9a und der Temperaturdifferenz zwischen der Messstelle des Thermoelements (S1) und der Platine vorgesehen ist, aus denen der Microcontroller (µC) die Absoluttemperatur an der Messstelle berechnet.
